# EUROPEAN PATENT APPLICATION

(11) **EP 1 324 551 A2**
(43) Date of publication of application: **02.07.2003**
(21) Application number: 02028984.9
(22) Date of filing: 27.12.2002
(51) Int. Cl.: H04L 12/56

(54) **XON/XOFF flow control for computer network**

(30) Priority: 31.12.2001 US 39189
(71) Applicant: Maxxan Systems, Inc., San Jose, CA 95131 (US)
(72) Inventor: Yao, Hawkins, San Jose, California 95148 (US); Oelke, Mark Lyndon, Spring, Texas 77379 (US); Jenne, John E., Houston, Texas 77069 (US)
(74) Representative: Grubert, Andreas

(57) **Abstract**

A system and method for providing XON/XOFF port-level flow control for a computer network (10) that has access to a plurality of network processors (30) in communication with the computer network (10). At least one network processor (30) has an egress port associated with an egress buffer, and a set of network processors (30) is associated with a bridge (25). XON/XOFF port-level flow control is implemented to halt and resume traffic directed to a congested port.

## Description

### FIELD OF THE INVENTION

The present invention is related to computer networks. More specifically, the present invention is related to providing flow control of information for a computer network.

### BACKGROUND OF THE INVENTION TECHNOLOGY

Fibre Channel standards define protocols for link-level and end-to-end congestion control. However, these standard protocols do not eliminate head of line (HOL) blocking within a switch. HOL blocking is a problem for internal switching that occurs when several packets at the head of an input queue block packets from being forwarded to output ports. Storage Area Network (SAN) switches that share egress buffer resources are particularly susceptible to HOL blocking when they become congested because, unlike typical TCP/IP switches and routers, a SAN switch does not discard traffic when it becomes congested.

### SUMMARY OF THE INVENTION

The present invention overcomes the above-identified problems as well as other shortcomings and deficiencies of existing technologies by providing an end-to-end, e.g., ingress port to egress port, traffic flow control through a computer network at the system level.

The present invention is directed to a method for providing XON/XOFF port-level flow control for a computer network that has access to a plurality of network processors in communication with the computer network. At least one network processor has an egress port associated with an egress buffer, and a set of network processors is associated with a bridge.

In one exemplary embodiment of the present system and method for flow control, XON/XOFF flow control is implemented to generate an XOFF message associated with the egress port if the egress buffer associated with that egress port has reached a high watermark. The XOFF message is sent to the network processors, and the network processors will stop sending cells to the egress port associated with the XOFF message. An XON message will be sent when the egress buffer reaches a low watermark. Upon receiving the XON message, the network processors will resume sending cells to the port.

The present invention is directed to a method comprising the steps of: determining if the depth of an egress buffer for an egress port has reached a high watermark, generating an XOFF message associated with the egress port if the egress buffer has reached the high watermark, and sending the XOFF message to the network processors. The network processors will stop sending cells to the egress port associated with the XOFF message in response to receiving the XOFF message. The computer system may further comprise a switch fabric. The network processors may be in operative communication with the switch fabric via the associated bridge. The step of sending the XOFF message to the network processors may further comprise the steps of: forwarding the XOFF message to the switch fabric and forwarding the XOFF message to the bridges. The method may further comprise the steps of: determining if the depth of an egress buffer for an egress port has reached a low watermark, generating an XON message associated with the egress port if the egress buffer has reached the low watermark, and sending the XON message to the network processors. The network processors may resume sending cells to the egress port associated with the XON message in response to receiving the XON message. The step of sending the XON message to the network processors may further comprise the steps of: forwarding the XON message to the switch fabric and forwarding the XON message to the bridges. The bridge may maintain a VOQ for each egress port of each network processor associated with the bridge. Each VOQ may be associated with a VOQ egress buffer. The step of generating the XOFF message may further comprise the steps of: generating a congestion indication message associated with the egress port if the VOQ egress buffer has reached a high watermark, wherein the egress port is associated with a network processor, and sending the congestion indication message to the network processor associated with the egress port. The network processor associated with the egress port may generate the XOFF message in response to receiving the congestion indication message. The step of generating the XON message may further comprise the steps of: generating a congestion cleared indication message associated with the egress port if the VOQ egress buffer has reached a low watermark, wherein the egress port is associated with a network processor, and sending the congestion cleared indication message to the network processor associated with the egress port. The network processor associated with the egress port may generate the XON message in response to receiving the congestion cleared message. The method may further comprise the steps of: determining if a cell is discardable and discarding the cell if the depth of the egress buffer for the egress port has reached a high watermark. The switch fabric may comprise a plurality of switch ports. Each switch port may be in operative communication with a bridge and may be associated with a switch VOQ. Each switch VOQ is associated with an VOQ ingress buffer. The method may further comprise the steps of: determining if the depth of a VOQ egress buffer for an switch port has reached a high watermark, generating an XOFF message associated with the switch port if the VOQ egress buffer has reached the high watermark, and sending the XOFF message to the network processors. The network processors may stop sending cells to the network processors associated with the bridge coupled to the switch port associated with the XOFF message in response to receiving the XOFF message. The method may further comprise the steps of: determining if the depth of a VOQ egress buffer for an switch port has reached a low watermark, generating an XON message associated with the switch port if the VOQ egress buffer has reached the low watermark, and sending the XON message to the network processors. The network processors may resume sending cells to the network processors associated with the bridge coupled to the switch port associated with the XON message in response to receiving the XON message.

An advantage of the present flow control schemes is that HOL blocking is substantially eliminated. The present flow control schemes alleviate the problems of increased system latency, unintentionally dropped packets, and time-out situations. Another advantage of the present flow control schemes is that more efficient data streaming is provided for the computer network. Other advantages will be apparent in view of the figures and detailed description below.

### BRIEF DESCRIPTION OF THE DRAWINGS

A more complete understanding of the present disclosure and advantages thereof may be acquired by referring to the following description taken in conjunction with the accompanying drawings, wherein:
Figure 1 is a block diagram of one exemplary embodiment of a computer network;
Figure 2 is an exemplary embodiment of a XON/XOFF flow control scheme of the present invention;
Figure 3 is an exemplary embodiment of a XON/XOFF flow control scheme of the present invention; and
Figure 4 is an exemplary embodiment of the XON/XOFF flow control scheme of the present invention;

While the present invention is susceptible to various modifications and alternative forms, specific exemplary embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF EXEMPLARY EMBODIMENTS

The present invention relates to a system and method for providing an end-to-end, e.g., ingress port to egress port, traffic flow control through a computer network, e.g., a SAN, at the system level. The presently disclosed system and method for flow control involves an end-to-end port-level (egress port to ingress port) flow control scheme that uses XON/XOFF flow control messages to manage traffic to a particular egress port. Generally, an XON flow control message enables traffic to the specified egress port, whereas the XOFF flow control message suspends traffic to the specified congested egress port. The XON/XOFF flow control messages are initiated from the egress port of a computer network switch, such as a SAN switch, for example, and are broadcast to all of the ingress ports in the computer network.

The flow control scheme of the present disclosure also provides for buffering at the ingress port. This ingress buffering is arranged into virtual output queues (VOQs). Typically, the computer network utilizes one queue for every possible egress port in the network switch. Each ingress frame that enters the network switch is queued to the VOQ that is associated with the destination port for the ingress frame. A scheduler selects frames from each VOQ to be transmitted through the switch fabric. An XOFF message simply removes a VOQ from the scheduler's arbiter, while an XON message re-enables a VOQ back into the arbitration process.

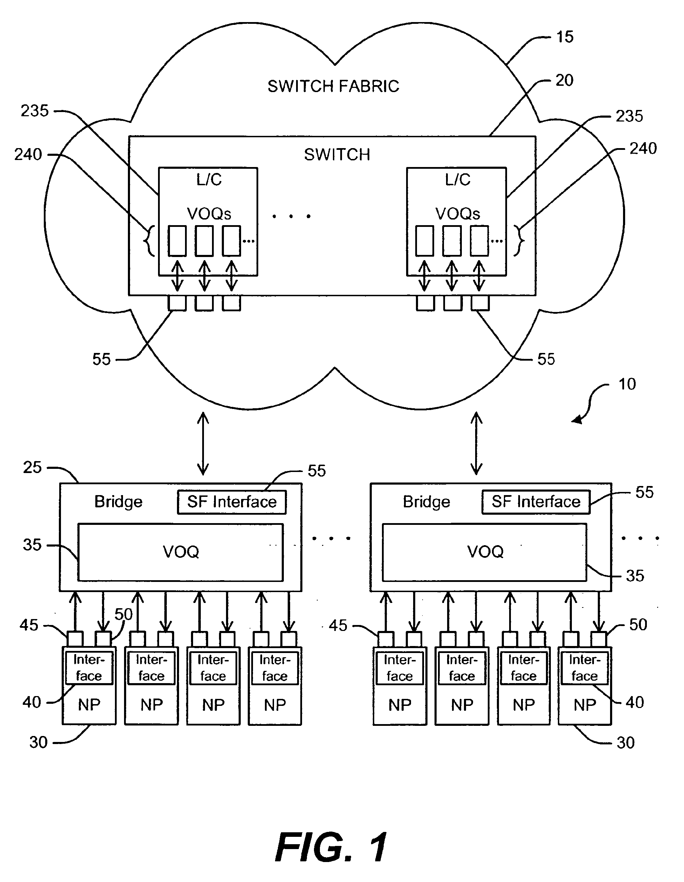

Figure 1 shows a functional block diagram of a computer network 10. The exemplary embodiment of computer network 10 shown in Figure 1 is a Fibre Channel SAN. Computer network 10 comprises a Fibre Channel protocol switching fabric 15. Switching fabric 15 comprises network switch 20. Network switch 20 may be any switch suitable for handling network traffic, such as a fibre channel switch or cross bar switch, for example. Computer network 10 also contains one or more bridge devices 25. Bridge 25 provides a connection between one or more network processors 30 and switch 20. Bridge 25 contains a switch fabric interface 55 to connect bridge 25 and switch 20. Bridge 25 may also comprise a VOQ 35 to provide a bandwidth matching function. In the particular embodiment illustrated in Figure 1, a 512-port SAN switch may be implemented by connecting 256 network processors 30 to a 64-port switch fabric 15. Each network processor 30 has an ingress switch interface 45 and an egress switch interface 50.

For the present disclosure, the network processor 30 may merely provide limited computational capabilities and may be satisfied by even rudimentary digital processors. Any of these digital processors need not exist within the present invention. Any necessary processing can be satisfied from remote processors. In a preferred embodiment of the present invention, latency may be reduced by having the network processor 30 within the system.

In the exemplary embodiment shown in Figure 1, each network processor 30 supports two 1 Gbps Fibre Channel ports. Each Fibre Channel port is made up of an ingress port 60 and an egress port 65. Each network processor 30 may include an interface 40. For example, network processor 30 may have an OC-48 (2.5 Gbps) CSIX interface to switch fabric 15. Switch 20 has one or more switch fabric ports 55 to provide a connection with bridge devices 25. Switch fabric port 55 may support any protocol operable to conduct traffic across network 10. For example, each of the switch fabric ports is an OC-192 (10 Gbps) CSIX interface. In the exemplary embodiment shown in Figure 1, each bridge 25 connects four network processors 30 to each switch fabric port 55.

Each network processor 30 has ingress buffering that is used to implement a VOQ for each egress Fibre Channel port 65 in the system. In the example discussed above, each network processor 30 implements 512 VOQs, one for each egress Fibre Channel port 65 in the system. Each network processor 30 also has egress buffering that is used to implement at least two outbound queues, one for each egress Fibre Channel port 65 connected to the network processor 30. The network processors 30 monitor the depth of the egress buffers for each of its two Fibre Channel ports 60 and 65.

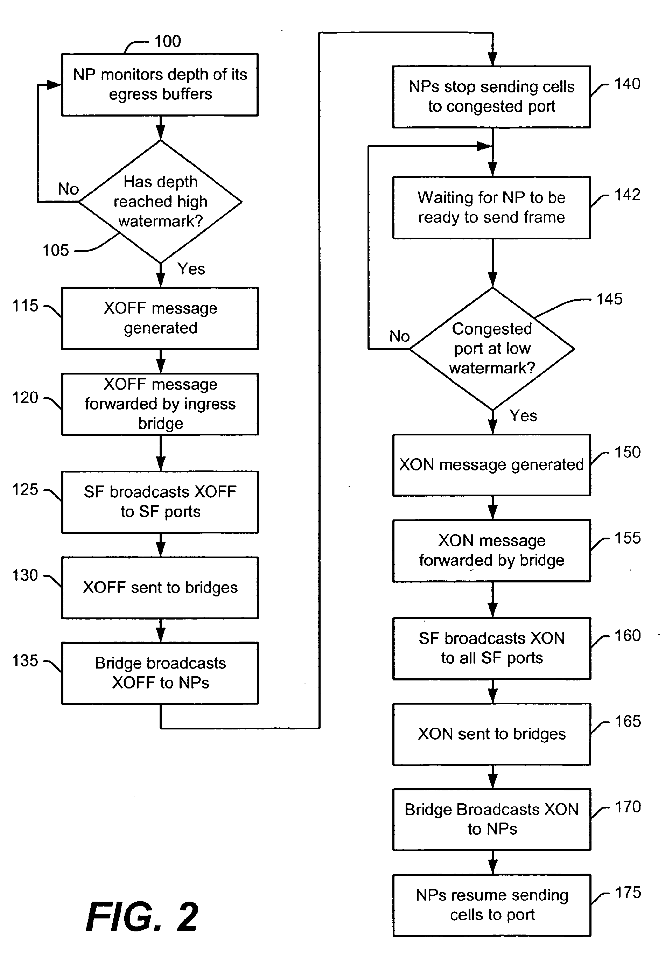

Figure 2 shows an exemplary embodiment for XON/XOFF port-level egress flow control for a computer network. At step 100, the network processor monitors the depth of its egress buffers. At step 105, the network processor determines whether the egress buffer has reached a pre-configured high watermark. As discussed above, each network processor 30 has an egress buffer for each egress Fibre Channel port 65 which a high watermark may be defined. If the egress buffer reaches this high watermark, then this indicates that the traffic across that port has become congested. If an egress buffer reaches the pre-configured high watermark, the network processor 30 generates an XOFF flow control message that corresponds to the congested port at step 115.

The XOFF flow control message is then sent into the switch fabric 15 in an appropriate network protocol format. For example, the XOFF message may be sent as a single CSIX multicast control cell. The multicast cell is then forwarded by the ingress bridge 25 at step 120. Next, at step 125, the switch fabric 15 then broadcasts the XOFF flow control message to all switch fabric ports 55. In the example discussed above, the XOFF flow control message would be sent to all 64 switch fabric ports 55. The XOFF flow control message is then sent to each bridge 25 at step 130. Subsequently, each egress bridge 25 broadcasts the XOFF flow control message to all network processors 30 downstream of the bridge 25, e.g. all four network processors 30 attached to the bridge 25, at step 135. Accordingly, at step 140, the network processors 30 then stop transmitting cells to the congested port indicated by the XOFF flow control message. At step 142, the system waits for the network processor to be ready to transmit a frame into the switch fabric.

The congested port will not be ready to receive cells until its egress buffer reaches a predetermined low watermark. Because the network processor continues to transmit cells from its egress Fibre Channel port, the number of egress cells that are buffered will decrease. Eventually the egress buffer reaches a low watermark. Accordingly, the network processor 30 will continue to monitor the egress buffer at step 145. When the congested egress buffer reaches the pre-configured low watermark, the network processor 30 generates an XON flow control message to start traffic to the port again at step 150. The XON flow control message may have the same path through the network 10 as the XOFF flow control message as discussed above. Once the XON message is generated, it may be forwarded to the switch fabric 10 by the ingress bridge at step 155. The XON message is then broadcast to all of the switch fabric ports 55 and transmitted to all of the bridges 25 at steps 160 and 165. Next, the bridges 25 send the XON message to the network processors 30. Once the network processors 30 have received the XON message, they will resume sending cells to the port in accordance with the XON message.

Depending on the configuration of the bridge 25 and network processors 30, the bridge 25 may be required to balance the bandwidth of the traffic sent to each network processor 30. For example, if the bridge switch fabric port 55 is an OC-192 interface and the bridge egress switch interfaces 50 are OC-48 interfaces, there is a potential 4x bandwidth mismatch when all traffic from the switch fabric port 55 is directed to a single egress switch interface 50. Therefore, the bridge 25 must also participate in the XON/XOFF flow control scheme. The bridge 25 provides egress buffering that is used to implement a VOQ for each egress Fibre Channel port downstream of the bridge 25. For example, using the network configuration described above, the bridge 25 may utilize eight VOQs, one for each egress port behind the bridge 25.

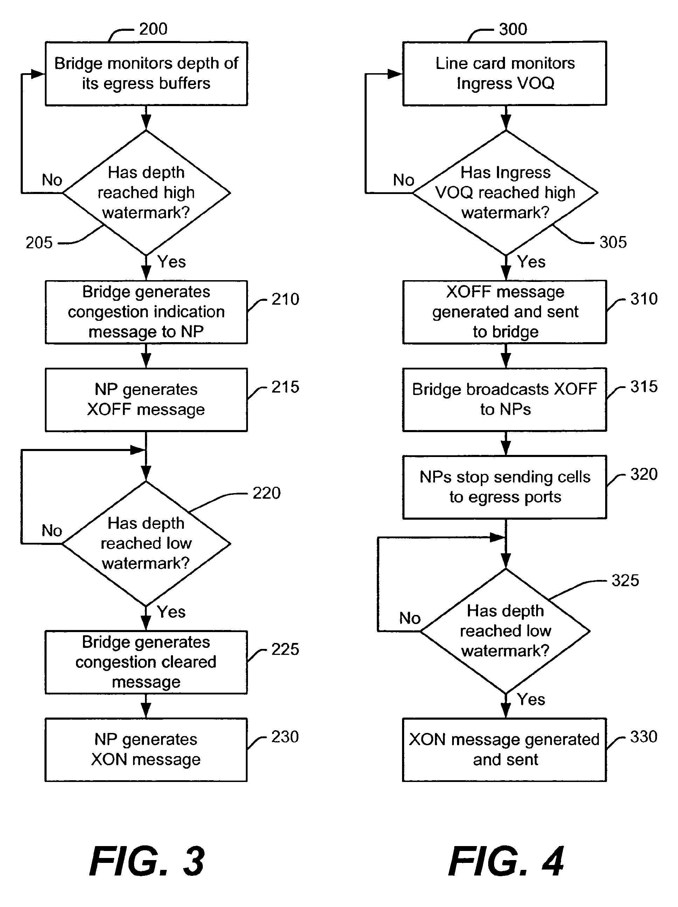

Figure 3 illustrates an exemplary embodiment of the flow control process that may be implemented by the bridge 25. At step 200 of Figure 3. the bridge 25 monitors the depth of its egress buffers. If it is determined at step 205 that the depth of one of the egress buffers reaches a pre-configured high watermark, the bridge 25 generates a special congestion indication message indicating the congested VOQ (port) at step 210. The bridge 25 sends the special congestion indication message to the network processor 30 that corresponds to the congested egress buffer. The receiving network processor 30 then uses the XOFF port-level flow control mechanism described above for the congested port at step 215. If it is determined at step 220 that the congested bridge egress buffer depth reaches a pre-configured low watermark, the bridge 25 generates a special message indicating that the congestion has cleared at step 225. The receiving network processor 30 subsequently uses its XON port-level flow control mechanism as described above to re-start traffic to the port.

The amount of egress buffering required by the bridge 25 may be dependent on the overall latency of the XON/XOFF flow control scheme. To avoid head-of-line blocking, the bridge 25 may buffer traffic when a port becomes congested until the XOFF flow control message has reached the ingress network processor 30 and all in-transit traffic has reached the egress bridge 25.
In another embodiment of the flow control scheme, the bridge 25 may allow for some cells to be discarded if an egress buffer becomes congested. A special tag in the cell header may be used to indicate whether or not a cell is discardable. The egress buffers have a programmable high watermark that indicates when to start discarding cells. If the depth of one of the egress buffers has reached the discard high watermark, all arriving cells destined to the congested egress buffer that are discardable are discarded. Cells are discarded until the egress buffer depth falls below a programmable low watermark. One embodiment for implementing the programmable watermark involves connecting bridge 25 to a microprocessor through a dedicated control bus. For example, a standard PCI bus may be used. The microprocessor uses this bus for initialization, configuration and management of bridge 25. The bus may be arbitrarily complicated or simple and can be used to modify the XON and XOFF thresholds, which are also programmable in bridge 25. A control bus may also be used for initialization, configuration and management of network processor 30. The bridge and the network processor may both use a standard PCI interface for the control bus.

As shown in Figure 1, the switch fabric 15 may have a line card 235 that also implements VOQs 240. Generally, a VOQ may be implemented for each egress port of the line card 235. For the example described above, the network 10 uses 64 VOQs, one for each of the 64 OC-192 ports, in the ingress path of the line card 235. Switch fabric VOQ level flow control is initiated by the line card 235 on the ingress path. In this example system, there are eight ports connected to the switch fabric line card 235 by the bridge 25 and four network processors 30. In this case, switch fabric VOQ level flow control has a line card granularity because eight ports map to one of the 64 VOQs.

Switch fabric VOQ level flow control is used by the ingress switch fabric line card 235 when one of its ingress VOQs 240 is congested and has reached a high watermark. Figure 4 illustrates an exemplary embodiment of the VOQ level flow control scheme. At step 300 of Figure 4, the switch fabric line card 235 monitors the ingress VOQs 240. Next, an XOFF flow control message is generated and sent to the bridge 25. The XOFF flow control message may be generated by the ingress switch fabric line card 235, for example. In the above exemplary network, the message is sent to the bridge 25 via the egress CSIX OC-192 interface. At step 315, the bridge 25 broadcasts the XOFF flow control message to the network processors, e.g., across each egress switch interface 50. Upon receipt, at step 320, the network processors 30 process the XOFF flow control message and stop sending cells to all of the egress ports that map to the switch fabric line card's congested ingress VOQ. An XON flow control message is sent to resume traffic when it is determined at step 325 that the VOQ is no longer congested and has reached a low watermark. In this particular exemplary scheme, switch fabric VOQ level flow control is provided only in the ingress direction.

The presently disclosed flow control schemes provide a number of advantages. One advantage of the present invention is that the flow control scheme substantially eliminates head of line (HOL) blocking. As discussed above Fibre Channel standards define link-level and end-to-end congestion control protocols but these standard protocols do not eliminate head of line (HOL) blocking. HOL blocking is a problem for internal switching that occurs when several packets at the head of an input queue block packets from being forwarded to output ports. The XON/XOFF flow control scheme prevents problems caused by HOL blocking such as increased system latency, unintentionally dropped packets, and time-out problems. Other advantages will be apparent to one of ordinary skill in the pertinent arts.

The invention, therefore, is well adapted to carry out the objects and attain the ends and advantages mentioned, as well as others inherent therein. While the invention has been depicted, described, and is defined by reference to exemplary embodiments of the invention, such references do not imply a limitation on the invention, and no such limitation is to be inferred. The invention is capable of considerable modification, alternation, and equivalents in form and function, as will occur to those ordinarily skilled in the pertinent arts and having the benefit of this disclosure. The depicted and described embodiments of the invention are exemplary only, and are not exhaustive of the scope of the invention. Consequently, the invention is intended to be limited only by the spirit and scope of the appended claims, giving full cognizance to equivalents in all respects.

## Claims

1. A method for providing XON/XOFF port-level flow control for a computer network that has access to a plurality of network processors in communication with the computer network, wherein at least one network processor is composed of an egress port associated with an egress buffer, and a set of network processors is associated with a bridge, the method comprising the steps of:
determining if the depth of an egress buffer for an egress port has reached a high watermark;
generating an XOFF message associated with the egress port if the egress buffer has reached the high watermark; and
sending the XOFF message to the network processors, wherein the network processors will stop sending cells to the egress port associated with the XOFF message in response to receiving the XOFF message.

2. The method of claim 1,
wherein the computer system further comprises a switch fabric; and
wherein the network processors are in operative communication with the switch fabric via the associated bridge.

3. The method of claim 2, wherein the step of sending the XOFF message to the network processors further comprises the steps of:
forwarding the XOFF message to the switch fabric; and
forwarding the XOFF message to the bridges.

4. The method of claim 3, further comprising the steps of:
determining if the depth of an egress buffer for an egress port has reached a low watermark;
generating an XON message associated with the egress port if the egress buffer has reached the low watermark; and
sending the XON message to the network processors, wherein the network processors will resume sending cells to the egress port associated with the XON message in response to receiving the XON message.

5. The method of claim 4, wherein the step of sending the XON message to the network processors, further comprises the steps of:
forwarding the XON message to the switch fabric; and
forwarding the XON message to the bridges.

6. The method of claim 5, wherein the bridge maintains a VOQ for each egress port of each network processor associated with the bridge, wherein each VOQ is associated with a VOQ egress buffer.

7. The method of claim 6, wherein the step of generating the XOFF message further comprises the steps of:
generating a congestion indication message associated with the egress port if the VOQ egress buffer has reached a high watermark, wherein the egress port is associated with a network processor; and
sending the congestion indication message to the network processor associated with the egress port, wherein the network processor associated with the egress port generates the XOFF message in response to receiving the congestion indication message.

8. The method of claim 7, wherein the step of generating the XON message further comprises the steps of:
generating a congestion cleared indication message associated with the egress port if the VOQ egress buffer has reached a low watermark, wherein the egress port is associated with a network processor; and
sending the congestion cleared indication message to the network processor associated with the egress port, wherein the network processor associated with the egress port generates the XON message in response to receiving the congestion cleared message.

9. The method of claim 8, further comprising the steps of:
determining if a cell is discardable; and
discarding the cell if the depth of the egress buffer for the egress port has reached a high watermark.

10. The method as in one of the claims 2-9, wherein the switch fabric comprises a plurality of switch ports, wherein each switch port is in operative communication with a bridge and is associated with a switch VOQ, wherein each switch VOQ is associated with an VOQ ingress buffer.

11. The method of claim 10, further comprising the steps of:
determining if the depth of a VOQ egress buffer for an switch port has reached a high watermark;
generating an XOFF message associated with the switch port if the VOQ egress buffer has reached the high watermark; and
sending the XOFF message to the network processors, wherein the network processors will stop sending cells to the network processors associated with the bridge coupled to the switch port associated with the XOFF message in response to receiving the XOFF message.

12. The method of claim 11, further comprising the steps of:
determining if the depth of a VOQ egress buffer for an switch port has reached a low watermark;
generating an XON message associated with the switch port if the VOQ egress buffer has reached the low watermark; and
sending the XON message to the network processors, wherein the network processors will resume sending cells to the network processors associated with the bridge coupled to the switch port associated with the XON message in response to receiving the XON message.
